# EUROPÄISCHE PATENTSCHRIFT

(11) **EP 4 561 877 B1**
(45) Veröffentlichungstag und Bekanntmachung des Hinweises auf die Patenterteilung: **19.08.2026**
(21) Anmeldenummer: 23730445.6
(22) Anmeldetag: 01.06.2023
(51) Int. Cl.: B60T 8/1766, B60T 8/26

(54) **VERFAHREN ZUM BETRIEB EINES KRAFTFAHRZEUGS, KRAFTFAHRZEUG SOWIE COMPUTERPROGRAMMPRODUKT**
METHOD FOR OPERATING A MOTOR VEHICLE, MOTOR VEHICLE, AND COMPUTER PROGRAM PRODUCT
PROCÉDÉ DE FONCTIONNEMENT D'UN VÉHICULE MOTORISÉ, VÉHICULE MOTORISÉ, ET PRODUIT PROGRAMME INFORMATIQUE

(30) Priorität: 26.07.2022 DE 102022118674
(43) Veröffentlichungstag der Anmeldung: 04.06.2025
(73) Patentinhaber: AUDI AG, 85045 Ingolstadt (DE)
(72) Erfinder: TREFFER, Ulrich, 93333 Neustadt a. d. Donau (DE)
(86) Internationale Anmeldenummer: PCT/EP2023/064646
(87) Internationale Veröffentlichungsnummer: WO 2024/022650

(56) Entgegenhaltungen:
- EP-A1- 1 792 797
- WO-A1-2005/016718
- DE-A1- 10 248 079
- DE-A1- 102018 109 636

## Beschreibung

Die Erfindung betrifft ein Verfahren zum Betrieb eines Kraftfahrzeugs. Des Weiteren betrifft die Erfindung ein Kraftfahrzeug sowie ein Computerprogrammprodukt.

Bei Parkvorgängen mit einem Kraftfahrzeug werden typischerweise Lenkmanöver bei geringer Geschwindigkeit ausgeführt. Diese Lenkmanöver können beispielsweise durch die Achsgeometrie und den Lenkrollradius zu einer Verspannung vor allem in den Fahrwerksbauteilen (Achse, Lenker, Bremse, Reifen) des Kraftfahrzeugs führen. Dies gilt insbesondere, wenn Lenkmanöver im Stillstand ausgeführt werden und/oder wenn Lenkmanöver bei betätigter Bremse ausgeführt werden. Wird dann im Folgenden die Bremse gelöst und/oder das Fahrzeug in Bewegung gesetzt, so wird die Verspannung wieder abgebaut. Der Abbau der Verspannung führt jedoch oftmals zu einem Geräusch im Fahrzeug, welches üblicherweise als störend wahrgenommen wird.

Aus der WO 2005 / 016 718 A1 ist ein Verfahren zum automatischen Unterdrücken von Geräuschentwicklungen beim Betätigen einer Fahrzeugbremsanlage mit Radbremsen bekannt.

In der DE 10 2018 109 636 A1 ist ein Verfahren beschrieben, bei dem eine Erzeugung eines Bremsgeräuschs entsprechend einem Zustand eines Bremsbelags verhindert wird.

Aus der EP 1 792 797 A1 ist ein Verfahren bekannt, durch welches sogenanntes Bremsknarzen vermieden werden soll.

In der DE 102 48 079 A1 ist ein Verfahren zur Anpassung einer Bremskraftverteilung in Abhängigkeit eines Motormoments beschrieben.

Aufgabe der vorliegenden Erfindung ist es, ein vorteilhaftes Verfahren zum Betrieb eines Kraftfahrzeugs zu schaffen. Außerdem ist es Aufgabe der vorliegenden Erfindung, ein vorteilhaft ausgestaltetes Kraftfahrzeug anzugeben sowie ein vorteilhaftes Computerprogrammprodukt.

Diese Aufgabe wird durch ein Verfahren mit den Merkmalen des Patentanspruchs 1, durch ein Kraftfahrzeug mit den Merkmalen des Patentanspruchs 5 und durch ein Computerprogrammprodukt mit den Merkmalen des Patentanspruchs 6 gelöst. Die im Hinblick auf das Verfahren angeführten Vorteile und bevorzugten Ausgestaltungen sind sinngemäß auch auf die Vorrichtungen, also das Computerprogrammprodukt einerseits und das Kraftfahrzeug andererseits, übertragbar und umgekehrt. Vorteilhafte Ausgestaltungen mit zweckmäßigen Weiterbildungen der Erfindung sind in den abhängigen Patentansprüchen angegeben.

Das erfindungsgemäße Verfahren dient dabei zum Betrieb eines erfindungsgemäßen Kraftfahrzeugs und umgekehrt ist ein erfindungsgemäßes Kraftfahrzeug eingerichtet, das erfindungsgemäße Verfahren in zumindest einem Betriebsmodus auszuführen.

Dabei weist das erfindungsgemäße Kraftfahrzeug zumindest zwei Achsen auf, nämlich eine Vorderachse und eine Hinterachse. Hierbei ist die Vorderachse bevorzugt als gelenkte Vorderachse ausgeführt und die Hinterachse ist bevorzugt als mitlenkende Hinterachse oder als ungelenkte Hinterachse ausgeführt. Weiter weist das Kraftfahrzeug, also das erfindungsgemäße Kraftfahrzeug, eine Bremsanlage mit zumindest vier Radbremsen auf, nämlich mit zwei vorderen Radbremsen, die an der Vorderachse angeordnet sind, und mit zwei hinteren Radbremsen, die an der Hinterachse angeordnet sind. Außerdem weist das Kraftfahrzeug eine Datenverarbeitungseinrichtung auf, welche insbesondere auch zur Steuerung der Bremsanlage eingerichtet ist.

Im Zuge der Ausführung des Verfahrens, also des erfindungsgemäßen Verfahrens, wird nun mittels der Datenverarbeitungseinrichtung eine Bremskraftverteilung vorgegeben. Hierbei wird dann mittels der Bremskraftverteilung ein vorderer Bremskraftanteil für die vorderen Radbremsen und ein hinterer Bremskraftanteil für die hinteren Radbremsen vorgegeben. Dabei bestimmen die Bremskraftanteile, also der vordere Bremskraftanteil und der hintere Bremskraftanteil, in welchem Verhältnis die vorderen Radbremsen und die hinteren Radbremsen zu einer Gesamtbremskraft beitragen, die bei einem Bremsvorgang mittels der Radbremsen der Bremsanlage generiert wird.

Es findet also insbesondere eine Steuerung der Bremsanlage oder eine Regelung in der Bremsanlage derart statt, dass ausgehend von einer Bremsanforderung oder in Abhängigkeit einer Bremsanforderung eine Gesamtbremskraft generiert wird. Die Gesamtbremskraft setzt sich dabei zusammen aus den Teil-Bremskräften, die mit den einzelnen Radbremsen generiert werden. Die Radbremsen werden hierbei derart angesteuert, dass die vorgegebene Bremskraftverteilung umgesetzt wird, wobei die vorderen Radbremsen entsprechend dem vorderen Bremskraftanteil zur Gesamtbremskraft beitragen und wobei die hinteren Radbremsen gemäß dem hinteren Bremskraftanteil zur Gesamtbremskraft beitragen.

Weiter wird im Zuge des Verfahrens die Bremskraftverteilung zur Verbesserung der NVH-Charakteristik des Kraftfahrzeugs angepasst, wenn mittels der Datenverarbeitungseinrichtung ermittelt wird, dass eine vorgegebene Bedingung erfüllt ist für ein akustisch wahrnehmbares Lösen einer Verspannung im Kraftfahrzeug. Dabei wird dann die Bremskraftverteilung ausgehend von einer Basisbremskraftverteilung derart angepasst, dass der vordere Bremskraftanteil verringert und der hintere Bremskraftanteil erhöht wird.

Hierdurch wird dann erreicht, dass Verspannungen im Kraftfahrzeug, also insbesondere Verspannungen der eingangs genannten Art, seltener auftreten und/oder weniger stark ausgeprägt auftreten. Dementsprechend treten dann auch die typischen Geräusche, die beim Lösen entsprechender Verspannungen üblicherweise wahrnehmbar sind, seltener auf und/oder sind weniger stark ausgeprägt, so dass diese in geringerem Maße als störend wahrgenommen werden. Dies verbessert die sogenannte NVH-Charakteristik des Kraftfahrzeugs. Dabei steht NVH für Noise-Vibration-Harshness und bezeichnet die akustisch und/oder haptisch wahrnehmbaren Schwingungen, die in Kraftfahrzeugen auftreten können.

Bevorzugt wird die Bremskraftverteilung dabei unabhängig von einer Bremsanforderung angepasst. Es wird daher vorzugsweise eine Anpassung in der Steuerung der Bremsanlage vorgenommen, also zum Beispiel eine Anpassung eines Steuerprogramms. Die Anpassung erfolgt dabei, sobald die vorgegebene Bedingung erfüllt ist. Die Generierung einer Gesamtbremskraft unter Berücksichtigung der angepassten Bremskraftverteilung erfolgt jedoch nur dann, wenn auch eine Bremsanforderung generiert wird, wenn also zum Beispiel ein Fahrer ein Bremspedal betätigt oder wenn eine Assistenzfunktion einen Bremsbefehl generiert, beispielsweise eine Assistenzfunktion, die zur Realisierung einer autonomen Fahrfunktion oder einer teilweise autonomen Fahrfunktion ausgebildet ist.

Davon unabhängig wird im Zuge des Verfahrens außerdem bevorzugt die Anpassung der Bremskraftverteilung rückgängig gemacht, wenn mittels der Datenverarbeitungseinrichtung ermittelt wird, dass die vorgegebene Bedingung nicht mehr erfüllt ist. Die Anpassung der Bremskraftverteilung erfolgt somit typischerweise zeitlich begrenzt. Sie erfolgt immer dann, wenn die vorgegebene Bedingung erfüllt ist, und wird immer dann rückgängig gemacht, wenn die vorgegebene Bedingung nicht mehr erfüllt ist.

Weiter ist es zweckdienlich, wenn die Bremskraftverteilung lediglich Basiswerte für die Bremskraftanteile vorgibt. Ausgehend von diesen Basiswerte erfolgt dann bevorzugt eine Ansteuerung der Radbremsen derart, dass Abweichungen von den Basiswerten zugelassen werden, um beispielsweise ein ABS-System (Antiblockiersystem) oder eine Fahrdynamikregelung (ESC: Electronic Stability Control) zu realisieren. Alternativ sind die Bremskraftanteile fest vorgegeben.

Davon unabhängig setzt sich die vorgegebene Bedingung je nach Anwendungsfall aus zwei oder mehr Teilbedingungen zusammen. In diesem Fall ist dann die vorgegebene Bedingung erst erfüllt, wenn alle vorgegebenen Teilbedingungen erfüllt sind.

Von Vorteil ist weiter eine nicht beanspruchte Ausführung des Verfahrens, bei der zumindest eine der Teilbedingungen erfüllt ist, wenn die Geschwindigkeit des Kraftfahrzeugs kleiner gleich einem vorgegebenen Grenzwert ist. Dabei liegt der Grenzwert je nach Anwendungsfall bevorzugt in einem Bereich zwischen 10 km/h und 60 km/h, weiter bevorzugt in einem Bereich zwischen 20 km/h und 60 km/h und insbesondere in einem Bereich zwischen 30 km/h und 60 km/h.

Zweckdienlich ist auch einer Ausführung des Verfahrens, bei der zumindest eine der Teilbedingungen erfüllt ist, wenn ein vorgegebener Grenzwert für einen Lenkeinschlag oder Lenkwinkel überschritten wird.

Davon unabhängig wird mittels der Datenverarbeitungseinrichtung in zumindest einem Betriebsmodus eine Trajektorie für das Kraftfahrzeug ermittelt. Dabei ist die Datenverarbeitungseinrichtung eingerichtet zur Realisierung einer Assistenzfunktion für eine autonome Fahrzeugführung oder für eine teilweise autonome Fahrzeugführung, wobei die Fahrzeugführung in dem zumindest einem Betriebsmodus durch die Assistenzfunktion auf Basis der ermittelten Trajektorie vorgenommen wird.

Weiter ist die vorgegebene Bedingung oder zumindest eine der Teilbedingungen erfüllt, wenn eine Steigerung der zuvor genannten Trajektorie größer gleich einem vorgegebenen Grenzwert ist.

Alternativ ist die vorgegebene Bedingung oder zumindest eine der Teilbedingungen erfüllt, wenn alternativ oder zusätzlich eine Krümmung der zuvor genannten Trajektorie größer gleich einem vorgegebenen Grenzwert ist.

Darüber hinaus ist eine Ausführungsvariante von Vorteil, bei der zumindest eine der Teilbedingungen erfüllt ist, wenn ausgehend von der zuvor genannten Trajektorie ein zeitweiser Bedarf für einen Lenkwinkel größer gleich 15° und insbesondere größer gleich 20° ermittelt wird.

Zweckdienlich ist außerdem eine Ausführung des Verfahrens, bei der zumindest eine der Teilbedingungen erfüllt ist, wenn eine zuvor genannte Assistenzfunktion aktiviert ist, zum Beispiel eine Parkassistenzfunktion oder eine Parklenkassistenzfunktion.

Günstig ist zudem eine nicht beanspruchte Verfahrensvariante, bei der mittels der Datenverarbeitungseinrichtung eine Hangneigung, also eine Steigung im örtlichen Geländeverlauf, ermittelt wird und bei der zumindest eine der Teilbedingungen erfüllt ist, wenn die Hangneigung größer gleich einem vorgegebenen Grenzwert ist. Je nach Anwendungsfall liegt der Grenzwert für die Hangneigung dabei in einem Bereich zwischen 2 % und 15 %, weiter bevorzugt in einem Bereich zwischen 4 % und 12 % und insbesondere in einem Bereich zwischen 6 % und 10 %.

Von Vorteil ist es weiter, wenn die Bremskraftverteilung in Abhängigkeit der Geschwindigkeit des Kraftfahrzeugs angepasst wird, indem der vordere Bremskraftanteil mit abnehmender Geschwindigkeit zunehmend verringert wird und der hintere Bremskraftanteil mit abnehmender Geschwindigkeit zunehmend erhöht wird. D. h., dass nicht einfach zwischen zwei verschiedenen Bremskraftverteilungen hin- und hergeschaltet wird, sondern dass eine zunehmende Umverteilung vorgenommen wird, wobei dann zweckdienlicherweise bei steigender Geschwindigkeit des Kraftfahrzeugs wieder eine gegenläufige Umverteilung vorgenommen wird.

Bevorzugt ist außerdem eine Verfahrensvariante, bei der die Bremskraftverteilung derart angepasst wird, dass der vordere Bremskraftanteil bis auf 0 % oder auf 0 % verringert wird und dass der hintere Bremskraftanteil bis auf 100 % oder auf 100 % erhöht wird. D. h., dass eine Anpassung der Bremskraftverteilung derart vorgenommen wird, dass zumindest in einem vorgegebenen Geschwindigkeitsbereich auf die Nutzung der vorderen Radbremsen verzichtet wird.

Es wird dann also, zumindest bei vorliegender Bremsanforderung, bevorzugt die Bremskraft auf die Hinterachse verteilt und die Vorderachse nicht mit Bremskräften beaufschlagt. Die Bremskraftverteilung auf die Hinterachse erfolgt bei hydraulischen Bremssystemen beispielsweise durch das Schließen von Einlassventilen in den Vorderachs-Bremsleitungen. Ein bestehender Bremsdruck an der Vorderachse kann durch bedarfsgerechtes Öffnen der Auslassventile reduziert und abgebaut werden, indem Bremsflüssigkeitsvolumen in den Bremsflüssigkeitsbehälter abgelassen wird. Die reduzierte Bremskraft an der Vorderachse wird durch eine Erhöhung der Bremskraft an der Hinterachse kompensiert, z.B. durch eine Erhöhung des Bremsdrucks an der Hinterachse. Die angeforderte Bremskraft wird in diesem Zustand vollständig durch die Hinterachse abgesetzt, soweit dies der Reibwert zwischen Reifen und Fahrbahn ermöglicht. Andernfalls wird eine Umverteilung auf die installierte Bremskraftverteilung, also die Basisbremskraftverteilung, vorgenommen. Durch die, in diesem Zustand, nicht gebremsten Vorderräder der Vorderachse können diese bei Lenkvorgängen auch im Stillstand frei rollen und es resultieren daraus keine Verspannungen, die sich beim Abbau der Bremskraft durch ein wahrnehmbares Geräusch lösen müssten.

Das zuvor beschriebene erfindungsgemäße Verfahren ist für eine Ausführung in einem erfindungsgemäßen Kraftfahrzeug oder durch ein erfindungsgemäßes Kraftfahrzeug vorgesehen. Umgekehrt ist ein erfindungsgemäßes Kraftfahrzeug zur Ausführung des entsprechenden Verfahrens in zumindest einem Betriebsmodus eingerichtet. Es weist eine zuvor beschriebene Bremsanlage auf sowie eine zuvor beschriebene Datenverarbeitungseinrichtung. Mittels der Datenverarbeitungseinrichtung erfolgt dann bevorzugt die Ausführung der einzelnen Verfahrensschritte des Verfahrens oder zumindest die Ausführung einer Anzahl Verfahrensschritte des Verfahrens, wobei hierfür weiter bevorzugt ein ausführbares Programm in der Datenverarbeitungseinrichtung hinterlegt oder installiert ist, welches nach einem Start das Verfahren bzw. die Anzahl Verfahrensschritte des Verfahrens automatisch ausführt.

Ein entsprechendes Programm lässt sich auch nachträglich mittels eines erfindungsgemäßen Computerprogrammprodukts installieren oder hinterlegen, sofern in einem Kraftfahrzeug bereits eine geeignete Bremsanlage sowie eine geeignete Datenverarbeitungseinrichtung vorhanden sind. Bei jenem Computerprogrammprodukt handelt es sich typischerweise um eine Datei oder einen Datenträger mit einer Datei, wobei die Datei das ausführbare Programm enthält, also insbesondere einen geeigneten Programmcode.

Es sei nochmals darauf hingewiesen, dass die im Hinblick auf das Verfahren angeführten Vorteile und bevorzugten Ausgestaltungen sinngemäß auch auf die Vorrichtungen, also das Computerprogrammprodukt einerseits und das Kraftfahrzeug andererseits, zu übertragen sind und umgekehrt.

Weitere Vorteile, Merkmale und Einzelheiten der Erfindung ergeben sich aus den Ansprüchen, der nachfolgenden Beschreibung bevorzugter Ausführungsformen sowie anhand der schematischen Zeichnung. Dabei zeigt:

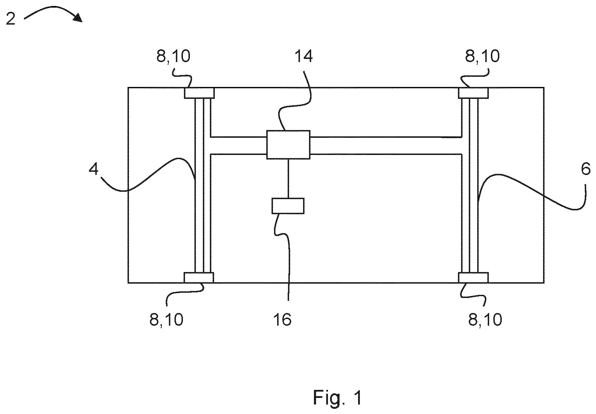

- Fig. 1: in einem Blockschaltbild ein Kraftfahrzeug.

Ein nachfolgend exemplarisch beschriebenes und in Fig. 1 schematisch dargestelltes Kraftfahrzeug 2 weist zwei Achsen 4,6 auf, nämlich eine Vorderachse 4 und eine Hinterachse 6. Hierbei ist die Vorderachse 4 als gelenkte Vorderachse 4 ausgeführt und die Hinterachse 6 ist als ungelenkte Hinterachse 6 ausgeführt.

Weiter weist das Kraftfahrzeug 2 eine Bremsanlage 8 auf mit zwei vorderen Radbremsen 10, die an der Vorderachse 4 angeordnet sind, und mit zwei hinteren Radbremsen 12, die an der Hinterachse 6 angeordnet sind.

Außerdem weist das Kraftfahrzeug 2 eine Datenverarbeitungseinrichtung 14 auf, welche unter anderem zur Steuerung der Bremsanlage 8 eingerichtet ist, sowie eine Sensoreinrichtung 16, welche signaltechnisch mit der Datenverarbeitungseinrichtung 14 verbunden ist. Die Datenverarbeitungseinrichtung 14 ist dabei im Ausführungsbeispiel eingerichtet, in zumindest einem Betriebsmodus ein Verfahren auszuführen, welches nachfolgend näher erläutert ist.

Im Zuge der Ausführung dieses Verfahrens wird mittels der Datenverarbeitungseinrichtung 14 eine Bremskraftverteilung vorgegeben. Hierbei wird dann mittels der Bremskraftverteilung ein vorderer Bremskraftanteil für die vorderen Radbremsen 10 und ein hinterer Bremskraftanteil für die hinteren Radbremsen 12 vorgegeben. Dabei bestimmen die Bremskraftanteile, also der vordere Bremskraftanteil und der hintere Bremskraftanteil, in welchem Verhältnis die vorderen Radbremsen 10 und die hinteren Radbremsen 12 zu einer Gesamtbremskraft beitragen, die bei einem Bremsvorgang mittels der Radbremsen 10,12 der Bremsanlage 8 generiert wird.

Weiter wird im Zuge des Verfahrens die Bremskraftverteilung zur Verbesserung der NVH-Charakteristik des Kraftfahrzeugs 2 angepasst, wenn mittels der Datenverarbeitungseinrichtung 14 ermittelt wird, dass eine vorgegebene Bedingung erfüllt ist für ein akustisch wahrnehmbares Lösen einer Verspannung im Kraftfahrzeug 2. Dabei wird dann die Bremskraftverteilung ausgehend von einer Basisbremskraftverteilung derart angepasst, dass der vordere Bremskraftanteil verringert und der hintere Bremskraftanteil erhöht wird.

Außerdem wird im Zuge des Verfahrens die Anpassung der Bremskraftverteilung rückgängig gemacht, wenn mittels der Datenverarbeitungseinrichtung 14 ermittelt wird, dass die vorgegebene Bedingung nicht mehr erfüllt ist. Die Anpassung der Bremskraftverteilung erfolgt somit nach Bedarf. Sie erfolgt immer dann, wenn die vorgegebene Bedingung erfüllt ist, und wird immer dann rückgängig gemacht, wenn die vorgegebene Bedingung nicht mehr erfüllt ist.

Bevorzugt ist dabei eine Verfahrensvariante, bei der die Bremskraftverteilung derart angepasst wird, dass der vordere Bremskraftanteil bis auf 0 % oder auf 0 % verringert wird und dass der hintere Bremskraftanteil bis auf 100 % oder auf 100 % erhöht wird. D. h., dass eine Anpassung Bremskraftverteilung derart vorgenommen wird, dass zumindest in einem vorgegebenen Geschwindigkeitsbereich auf die Nutzung der vorderen Radbremsen 10 verzichtet wird.

In einem nicht beanspruchten Ausführungsbeispiel ist weiter die vorgegebene Bedingung erfüllt, wenn die Geschwindigkeit des Kraftfahrzeugs 2 kleiner gleich einem vorgegebenen Grenzwert ist. Dabei liegt der Grenzwert bevorzugt in einem Bereich zwischen 30 km/h und 60 km/h. Die Geschwindigkeit des Kraftfahrzeugs 2 wird hierbei mittels der Sensoreinrichtung 16 ermittelt.

Der Erfindung entsprechend ist die Datenverarbeitungseinrichtung 14 eingerichtet zur Realisierung einer Assistenzfunktion für autonome Parkvorgänge, also eine Parkassistenzfunktion. Dabei wird bei aktivierter Assistenzfunktion durch die Datenverarbeitungseinrichtung 14 eine Trajektorie für das Kraftfahrzeug 2 auf der Basis von Sensordaten der Sensoreinrichtung 16 ermittelt.

Die vorgegebene Bedingung ist dann erfüllt, wenn eine Steigerung der zuvor genannten Trajektorie größer gleich einem vorgegebenen Grenzwert ist. Einer weiteren Ausführungsvariante entsprechend ist die vorgegebene Bedingung erfüllt, wenn alternativ oder zusätzlich zur Steigung eine Krümmung der Trajektorie größer gleich einem vorgegebenen Grenzwert ist.

### BEZUGSZEICHENLISTE:

- 2: Kraftfahrzeug
- 4: Vorderachse
- 6: Hinterachse
- 8: Bremsanlage
- 10: vordere Radbremse
- 12: hintere Radbremse
- 14: Datenverarbeitungseinrichtung
- 16: Sensoreinrichtung

## Patentansprüche

1. Verfahren zum Betrieb eines Kraftfahrzeugs (2), welches zumindest zwei Achsen (4,6) aufweist, nämlich eine Vorderachse (4) und eine Hinterachse (6), welches eine Bremsanlage (8) mit zumindest vier Radbremsen aufweist, nämlich zwei vordere Radbremsen (10), die an der Vorderachse (4) angeordnet sind, und zwei hintere Radbremsen (12), die an der Hinterachse (6) angeordnet sind, und welches eine Datenverarbeitungseinrichtung (14) aufweist,
wobei
- die Datenverarbeitungseinrichtung (14) eingerichtet ist für eine autonome oder teilweise autonome Fahrzeugführung,
- mittels der Datenverarbeitungseinrichtung (14) eine Bremskraftverteilung vorgegeben wird,
- mittels der Bremskraftverteilung ein vorderer Bremskraftanteil für die vorderen Radbremsen (10) und ein hinterer Bremskraftanteil für die hinteren Radbremsen (12) vorgegeben wird,
- die Bremskraftverteilung zur Verbesserung der NVH-Charakteristik des Kraftfahrzeugs (2) angepasst wird, wenn mittels der Datenverarbeitungseinrichtung (14) ermittelt wird, dass eine vorgegebene Bedingung erfüllt ist für ein akustisch wahrnehmbares Lösen einer Verspannung im Kraftfahrzeug (2),
- die Bremskraftverteilung angepasst wird, indem der vordere Bremskraftanteil verringert und der hintere Bremskraftanteil erhöht wird,
- mittels der Datenverarbeitungseinrichtung (14) eine Trajektorie für das Kraftfahrzeug (2) ermittelt wird,
- die autonome bzw. teilweise autonome Fahrzeugführung auf der Basis der ermittelten Trajektorie vorgenommen wird und
- die vorgegebene Bedingung erfüllt ist, wenn eine Steigung der Trajektorie größer gleich einem vorgegebenen Grenzwert ist oder wenn eine Krümmung der Trajektorie größer gleich einem vorgegebenen Grenzwert ist.

2. Verfahren nach Anspruch 1,
wobei die Bremskraftverteilung unabhängig von einer Bremsanforderung angepasst wird.

3. Verfahren nach Anspruch 1 oder 2,
wobei die Bremskraftverteilung in Abhängigkeit der Geschwindigkeit des Kraftfahrzeugs (2) angepasst wird, indem der vordere Bremskraftanteil mit abnehmender Geschwindigkeit zunehmend verringert und der hintere Bremskraftanteil mit abnehmender Geschwindigkeit zunehmend erhöht wird.

4. Verfahren nach einem der Ansprüche 1 bis 3,
wobei die Bremskraftverteilung angepasst wird, indem der vordere Bremskraftanteil auf 0 % verringert und der hintere Bremskraftanteil auf 100 % erhöht wird.

5. Kraftfahrzeug (2) enthaltend eine Datenverarbeitungseinrichtung (14), die zur Ausführung eines Verfahrens nach einem der vorherigen Ansprüche in zumindest einem Betriebsmodus eingerichtet ist.

6. Computerprogrammprodukt enthaltend ein auf einer Datenverarbeitungseinrichtung (14) ausführbares Programm, welches nach einem Start ein Verfahren nach einem der vorherigen Ansprüche automatisch ausführt.

## Claims

1. Method for operating a motor vehicle (2) which has at least two axles (4, 6), namely a front axle (4) and a rear axle (6), which comprises a braking system (8) with at least four wheel brakes, namely two front wheel brakes (10) arranged on the front axle (4) and two rear wheel brakes (12) arranged on the rear axle (6), and which comprises a data processing unit (14),
wherein
- the data processing unit (14) is configured for autonomous or partially autonomous vehicle control,
- a brake force distribution is specified by means of the data processing unit (14),
- by means of the brake force distribution, a front brake force component is allocated to the front wheel brakes (10) and a rear brake force component to the rear wheel brakes (12),
- the brake force distribution is adjusted to improve the NVH characteristics of the motor vehicle (2) if the data processing unit (14) determines that a specified condition is met for an acoustically perceptible release of tension in the motor vehicle (2),
- the brake force distribution is adjusted by reducing the front brake force component and increasing the rear brake force component,
- a trajectory for the motor vehicle (2) is determined by means of the data processing unit (14),
- autonomous or partially autonomous vehicle control is carried out on the basis of the determined trajectory, and
- the specified condition is met if a gradient of the trajectory is greater than or equal to a specified threshold value, or if the curvature of the trajectory is greater than or equal to a specified threshold.

2. Method according to claim 1,
wherein the brake force distribution is adjusted independently of any braking demand.

3. Method according to claim 1 or 2,
wherein the brake force distribution is adjusted according to the speed of the motor vehicle (2) by progressively reducing the front brake force component as the speed decreases and progressively increasing the rear brake force component as the speed decreases.

4. Method according to any one of claims 1 to 3,
wherein the brake force distribution is adjusted by reducing the front brake force component to 0% and increasing the rear brake component to 100%.

5. Motor vehicle (2) comprising a data processing unit (14) which is configured to carry out a method according to any one of the preceding claims in at least one operating mode.

6. Computer program product containing a program which can be carried out on a data-processing unit (14), which after a start-up automatically carries out a method according to any one of the preceding claims.

## Revendications

1. Procédé de fonctionnement d'un véhicule automobile (2) qui présente au moins deux essieux (4, 6), à savoir un essieu avant (4) et un essieu arrière (6), qui présente une installation de freinage (8) avec au moins quatre freins de roue, à savoir deux freins de roue (10) avant qui sont agencés au niveau de l'essieu avant (4), et deux freins de roue (12) arrière qui sont agencés au niveau de l'essieu arrière (6), et qui présente un dispositif de traitement de données (14),
dans lequel
- le dispositif de traitement de données (14) est conçu pour une conduite de véhicule autonome ou partiellement autonome,
- une répartition de force de freinage est prédéfinie au moyen du dispositif de traitement de données (14),
- une part de force de freinage avant pour les freins de roue avant (10) et une part de force de freinage arrière pour les freins de roue arrière (12) sont prédéfinies au moyen de la répartition de force de freinage,
- la répartition de force de freinage est adaptée pour améliorer la caractéristique NVH du véhicule automobile (2) lorsqu'il est déterminé à l'aide du dispositif de traitement de données (14) qu'une condition prédéfinie est remplie pour un relâchement perceptible acoustiquement d'une tension dans le véhicule automobile (2),
- la répartition de force de freinage est adaptée en réduisant la part de force de freinage avant et en augmentant la part de force de freinage arrière,
- une trajectoire pour le véhicule automobile (2) est déterminée à l'aide du dispositif de traitement de données (14),
- la conduite de véhicule autonome ou partiellement autonome est entreprise sur la base de la trajectoire déterminée et
- la condition prédéfinie est remplie lorsqu'un dénivellement de la trajectoire est supérieur ou égal à une valeur limite prédéfinie ou lorsqu'une courbure de la trajectoire est supérieure ou égale à une valeur limite prédéfinie.

2. Procédé selon la revendication 1,
dans lequel la répartition de force de freinage est adaptée indépendamment d'une exigence de freinage.

3. Procédé selon la revendication 1 ou 2,
dans lequel la répartition de force de freinage est adaptée en fonction de la vitesse du véhicule automobile (2) en réduisant progressivement la part de force de freinage avant au fur et à mesure que la vitesse diminue et en augmentant progressivement la part de force de freinage arrière au fur et à mesure que la vitesse diminue.

4. Procédé selon l'une quelconque des revendications 1 à 3,
dans lequel la répartition de force de freinage est adaptée en réduisant la part de force de freinage avant à 0 % et en augmentant la part de force de freinage arrière à 100 %.

5. Véhicule automobile (2) contenant un dispositif de traitement de données (14) qui est conçu pour exécuter un procédé selon l'une quelconque des revendications précédentes dans au moins un mode de fonctionnement.

6. Produit de programme informatique contenant un programme exécutable sur un dispositif de traitement de données (14) qui exécute automatiquement un procédé selon l'une quelconque des revendications précédentes après un démarrage.
